# EUROPEAN PATENT APPLICATION

(11) **EP 3 070 264 A1**
(43) Date of publication of application: **21.09.2016**
(21) Application number: 14862038.8
(22) Date of filing: 10.10.2014
(51) Int. Cl.: F01D 5/14, F01D 9/02

(54) **VANE STRUCTURE FOR AXIAL FLOW TURBOMACHINE AND GAS TURBINE ENGINE**

(30) Priority: 15.11.2013 JP 2013236476
(71) Applicant: IHI Corporation, Tokyo 135-8710 (JP)
(72) Inventor: TANIMITSU, Haruyuki, Tokyo 135-8710 (JP)
(74) Representative: MERH-IP Matias Erny Reichl Hoffmann Patentanwälte PartG mbB
(86) International application number: PCT/JP2014/077151
(87) International publication number: WO 2015/072256

(57) **Abstract**

A vane structure for an axial flow turbomachine that has: a single-vane section (1s, 2s) of a one-vane structure formed in a part in a vane radial direction; and a tandem-vane section (1t, 2t) which is formed in a remaining part in the vane radial direction continuously with the single-vane section (1s, 2s), and which includes a front vane (12, 22) and a rear vane (13, 23) arranged forward and backward with respect to an airflow that flows through a flow path, respectively.

## Description

### TECHNICAL FIELD

The present invention relates to a vane structure for an axial flow turbomachine and a gas turbine engine which are obtained by the improvement of efficiency.

### BACKGROUND ART

An axial flow turbomachine, such as an axial flow compressor and an axial flow turbine, includes a rotor having a plurality of rotor vanes and a stator having a plurality of stator vanes, the rotor and the stator being arranged in a plurality of stages in an axial direction. The axial flow turbomachine is used in, for example, a gas turbine engine for aircrafts in many cases. In the rotor vane or the stator vane of the axial flow turbomachine, a flow is accelerated on a convex surface side of the vane. Generally, a vane is designed so that a position where a velocity of a flow reaches a maximum (i.e., a position where the velocity of the flow reaches a peak Mach number) is brought close to a trailing edge side of the vane as much as possible. Assuming that the position where the flow velocity reaches a maximum is a trailing edge of the vane, there is no region in the vane where the flow decelerates. In contrast, when the position where the flow velocity reaches the maximum is located more forward than the trailing edge of the vane, an airflow decelerates from the position up to the trailing edge of the vane. In this case, separation of boundary layer may be generated due to the deceleration region to thereby cause reduction in efficiency, or a secondary flow (a flow having a turning component of a direction different from a main flow of gas) may be generated.

Patent Literature 1 discloses a tandem cascade constituted of tandem vanes obtained by a combination of a front vane and a rear vane. Such a tandem cascade adjusts a velocity, a momentum, and the like of a jet flow so that the jet flow blowing up onto an upper surface of the rear vane from a trailing edge of a lower surface of the front vane flows along the upper surface of the rear vane, and thus suppresses a separation of a boundary layer of the upper surface of the rear vane.

Patent Literature 2 discloses a compressor structure including: a tandem rotor vane: and a tandem stator vane that is located on a downstream of the tandem rotor vane and that turns a flow from the tandem rotor vane at a predetermined angle. Similarly to Patent Literature 1, the tandem rotor vane and the tandem stator vane are configured so as to suppress a separation of a boundary layer in an upper surface of a rear vane. An object of Patent Literature 2 is to obtain a higher pressure ratio with the smaller number of stages by alternately arranging, in multiple stages, such a tandem rotor vane and a tandem stator vane.

### CITATION LIST

### PATENT LITERATURE

Patent Literature 1: Japanese Patent No. 2954539
Patent Literature 2: Japanese Patent Laid-Open Publication No. 11-22486

### SUMMARY OF INVENTION TECHNICAL PROBLEM

The rotor vane and the stator vane are radially arranged toward a radial direction of the axial flow turbomachine. Usually, a velocity ratio of one end side in a vane radial direction in each vane and a velocity ratio of the other end side therein are different from each other. Here, the velocity ratio means a ratio of a velocity of a flow in an outlet of the vane (an outlet velocity) to a velocity of the flow in an inlet of the vane (an inlet velocity) . That is, the velocity ratio is a value obtained by dividing the outlet velocity by the inlet velocity. The velocity ratio is large in the one end side in the vane radial direction in the rotor vane and the stator vane of the axial flow turbomachine. Accordingly, it is relatively easy to set the above-described position of the maximum velocity near the trailing edge. However, the velocity ratio of the other end side in the vane radial direction is relatively smaller than that of the above-described one end side. Therefore, there is a problem in which the position of the maximum velocity tends to be located more forward than the trailing edge to thereby cause a deceleration region.

In the tandem vanes described in Patent Literatures 1 and 2, the whole vane is separated into the front vane and the rear vane to thereby suppress the separation of the boundary layer in the upper surface of the rear vane. However, as described above, since the velocity ratios on the one end side and the other end side in the vane radial direction are different from each other, a uniform effect is not necessarily obtained in a whole region in the vane radial direction. Namely, when the one end side having a larger velocity ratio in the vane radial direction is used as a criterion, it becomes difficult to suppress a separation of the boundary layer of the other end side having a smaller velocity ratio in the vane radial direction. On the contrary, when the other end side having the smaller velocity ratio in the vane radial direction is used as the criterion, a blow-out force in the one end side having the larger velocity ratio in the vane radial direction becomes too strong, thereby causing a secondary flow.

The present invention has been devised in view of the above circumstances, and an object thereof is to provide a vane structure for an axial flow turbomachine and a gas turbine engine which can reduce a deceleration region of a trailing edge in a stator vane or a rotor vane, can also suppress generation or growth of a secondary flow, and thus can achieve enhancement in efficiency.

### SOLUTION TO PROBLEM

A first aspect of the present invention is a vane structure for an axial flow turbomachine, a vane being used as a rotor vane or a stator vane arranged in a flow path of the axial flow turbomachine, and the vane structure includes: a single-vane section of a one-vane structure formed in a part in a vane radial direction; and a tandem-vane section which is formed in a remaining part in the vane radial direction continuously with the single-vane section, and which includes a front vane arranged forward in an airflow flowing through the axial flow turbomachine and a rear vane arranged backward therein.

A second aspect of the present invention is a gas turbine engine, and the gas turbine engine includes an axial flow turbomachine including the vane of the structure according to the first aspect as a rotor vane or a stator vane.

The tandem-vane section may be formed on a side having a smaller velocity ratio of one end side and the other end side in the vane radial direction. The single-vane section may be formed on a side having a larger velocity ratio of the one end side and the other end side in the vane radial direction.

The tandem-vane section may be formed on a surface having a larger endwall slope angle of an inner endwall surface and an outer endwall surface of the flow path in a radial direction. The single-vane section may be formed on a surface having a smaller endwall slope angle of the inner endwall surface and the outer endwall surface of the flow path in the radial direction.

The single-vane section and the tandem-vane section may constitute the rotor vane. In this case, the tandem-vane section may be located on an inner endwall surface side of the flow path in the radial direction.

The single-vane section and the tandem-vane section may constitute the stator vane. In this case, the tandem-vane section may be located on the inner endwall surface side or an outer endwall surface side of the flow path in the radial direction.

In addition, a convex surface side of the rear vane may be continuous with a convex surface side of the single-vane section. The front vane may be inclined to the single-vane section.

### ADVANTAGEOUS EFFECTS OF INVENTION

According to the vane structure for the axial flow turbomachine and the gas turbine engine according to the present invention, a load of a deceleration region in a trailing edge portion of the vane that causes reduction in efficiency can be distributed to the front vane and the rear vane of the tandem vane, the deceleration region as the whole vane can be reduced, and enhancement in efficiency can be achieved.

In addition, the tandem-vane section including the front vane and the rear vane is formed in the part of the rotor vane or the stator vane, whereby a static pressure difference between a convex surface side and a concave surface side can be eliminated in the trailing edge portion of the front vane although the secondary flow easily grows toward the trailing edge, the secondary flow can be reduced, and enhancement in efficiency can be achieved.

### BRIEF DESCRIPTION OF DRAWINGS

[Fig. 1] Fig. 1 is a side cross-sectional view in a turbine portion of a gas turbine engine according to one embodiment of the present invention.
[Fig. 2] Figs. 2(a) to 2(c) are explanatory views showing structures of a rotor vane and a stator vane shown in Fig. 1, Fig. 2(a) is a perspective view of the stator vane, Fig. 2(b) is a perspective view of the rotor vane, and Fig. 2(c) is a cross-sectional view of a region X in Fig. 2(b).
[Fig. 3] Fig. 3 is an explanatory view showing change of velocity ratios according to radial positions of the rotor vane and the stator vane (positions in a vane radial direction).
[Fig. 4] Fig. 4 is an explanatory view showing change of an airflow velocity from a leading edge to a trailing edge of a vane structure in prior art.
[Fig. 5] Fig. 5 is an explanatory view showing change of an airflow velocity of a vane structure according to the embodiment.
[Fig. 6] Figs. 6(a) and 6(b) are explanatory views for showing one of effects of the vane structure according to the embodiment, Fig. 6(a) shows a cross-sectional view of the conventional vane structure, and Fig. 6(b) shows a cross-sectional view of the vane structure according to the embodiment.

### DESCRIPTION OF EMBODIMENTS

Hereinafter, one embodiment of the present invention will be explained in detail with reference to accompanying drawings. Dimensions, materials, other specific numerical values, and the like shown in such an embodiment are merely exemplification for facilitating understanding of the invention, and do not limit the present invention unless otherwise mentioned. Note that, in the specification and the drawings, overlapping explanation of elements having substantially the same functions and configurations is omitted by attaching the same symbols to the elements, and that illustration of elements having no direct relation to the present invention is omitted.

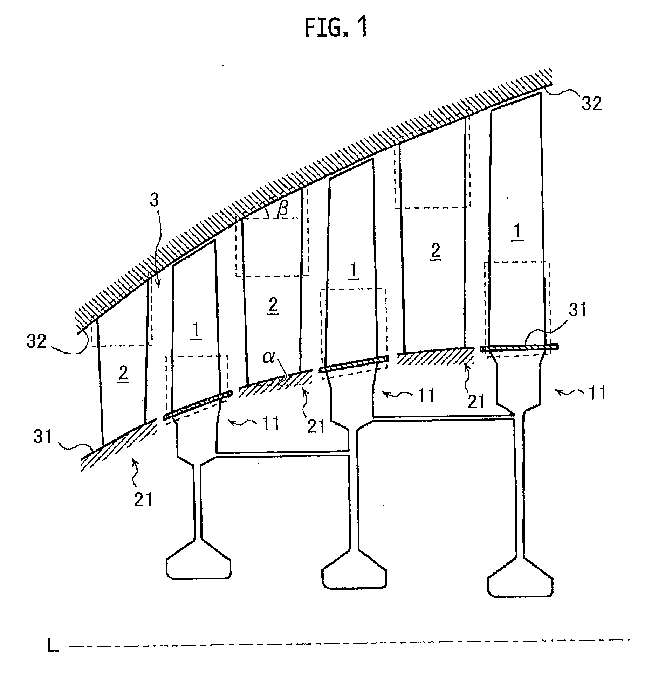

As shown in Fig. 1, a gas turbine engine according to the embodiment has: a rotor 11 including a plurality of rotor vanes 1; and a stator 21 including a plurality of stator vanes 2. A vane structure of an axial flow turbomachine, which will be described later, is applied to these rotor vanes 1 and stator vanes 2. The gas turbine engine is, for example, a jet engine, and has an intake port, a compressor, a combustion chamber, a turbine, and an exhaust port in that order from an upstream side although they are not shown. The rotor 11 and the stator 21 of Fig. 1 are shown as parts of the turbine. Note that the vane structure according to the embodiment can also be applied to a rotor vane and a stator vane of the compressor.

A flow path 3 of the turbine has an annular cross section arranged around a rotational axis L, and extends substantially along the rotational axis L. The flow path 3 has an inner endwall surface 31 inside in a radial direction and an outer endwall surface 32 outside in the radial direction. Usually, the radial direction coincides with a vane radial direction. The rotor 11 includes a rotor vane 1, and a platform that supports a root portion thereof and constitutes the inner endwall surface 31. In contrast, the stator 21 includes: the outer endwall surface 32; the stator vane 2 fixed to (supported by) the outer endwall surface 32; and a platform that is provided inside the stator vane 2 in the radial direction, and that constitutes the inner endwall surface 31. As shown in Fig. 1, the platforms of the rotor vane 1 and the stator vane 2 are continuously formed so as to form a flow path surface (the inner endwall surface 31) having a predetermined shape as a whole. In addition, the outer endwall surface 32 constitutes a part of a casing that covers an outer periphery of the turbine.

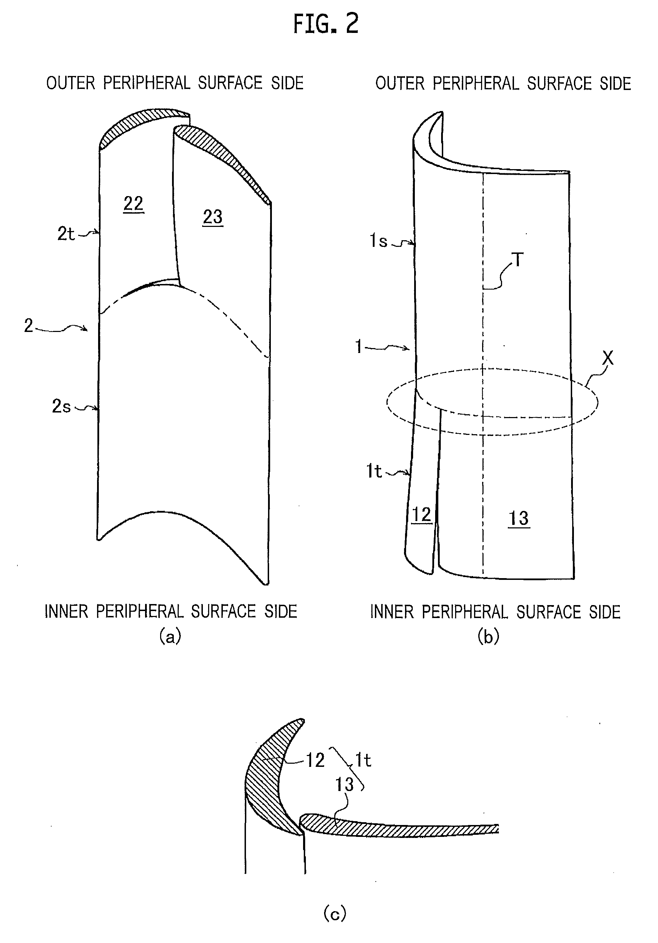

As shown in Fig. 2(b), the rotor vane 1 has: a single-vane section 1s formed in a part of the rotor vane 1 in the vane radial direction; and a tandem-vane section 1t formed in a remaining part of the rotor vane 1 in the vane radial direction continuously with the single-vane section 1s. In other words, the single-vane section 1s and the tandem-vane section 1t form one vane body that extends in the vane radial direction, the single-vane section 1s is provided in a part of the vane body in the vane radial direction, and the tandem-vane section 1t is provided in a remaining part of the vane body in the vane radial direction. Furthermore, in other words, the rotor vane 1 has: the single-vane section 1s that extends in the vane radial direction; and the tandem-vane section 1t coupled to the single-vane section 1s in the vane radial direction. As shown in Figs. 2(b) and 2(c), the single-vane section 1s has a structure constituted of one vane. In addition, the tandem-vane section 1t includes : a front vane 12 arranged forward with respect to an airflow that flows through the turbine (i. e. , the axial flow turbomachine) ; and a rear vane 13 arranged backward with respect to the airflow. In other words, the tandem-vane section 1t includes: the front vane 12 arranged forward in the airflow that flows through the turbine; and the rear vane 13 arranged backward therein.

As shown in Fig. 2(a), the stator vane 2 also has: a single-vane section 2s formed in a part of the stator vane 2 in a vane radial direction; and a tandem-vane section 2t formed in a remaining part of the stator vane 2 in the vane radial direction continuously with the single-vane section 2s. In other words, the single-vane section 2s and the tandem-vane section 2t form one vane body that extends in the vane radial direction, the single-vane section 2s is provided in a part of the vane body in the vane radial direction, and the tandem-vane section 2t is provided in a remaining part of the vane body in the vane radial direction. Furthermore, in other words, the stator vane 2 has: the single-vane section 2s that extends in the vane radial direction; and the tandem-vane section 2t coupled to the single-vane section 2s in the vane radial direction. Similarly to the single-vane section 1s, the single-vane section 2s has a structure constituted of one vane. Moreover, similarly to the tandem-vane section 1t of the rotor vane 1, the tandem-vane section 2t includes: a front vane 22 arranged forward with respect to the airflow that flows through the turbine (i.e., the axial flow turbomachine); and a rear vane 23 arranged backward with respect to the airflow. In other words, the tandem-vane section 2t includes: the front vane 22 arranged forward in the airflow that flows through the turbine; and the rear vane 23 arranged backward therein.

Broken lines in Fig. 1 show portions in which the tandem-vane sections 1t and 2t are formed. As shown in Fig. 1, in the rotor vane 1 of the embodiment, the tandem-vane section 1t is formed on an inner endwall surface 31 side of the flow path 3, and the single-vane section 1s is formed on an outer endwall surface 32 side of the flow path 3. In addition, in the stator vane 2 of the embodiment, the tandem-vane section 2t is formed on the outer endwall surface 32 side of the flow path 3, and the single-vane section 2s is formed on the inner endwall surface 31 side of the flow path 3. Namely, arrangement (alignment) of the single-vane sections 1s and 2s and the tandem-vane sections 1t and 2t in the radial direction (the vane radial direction) is reversed in the rotor vane 1 and the stator vane 2.

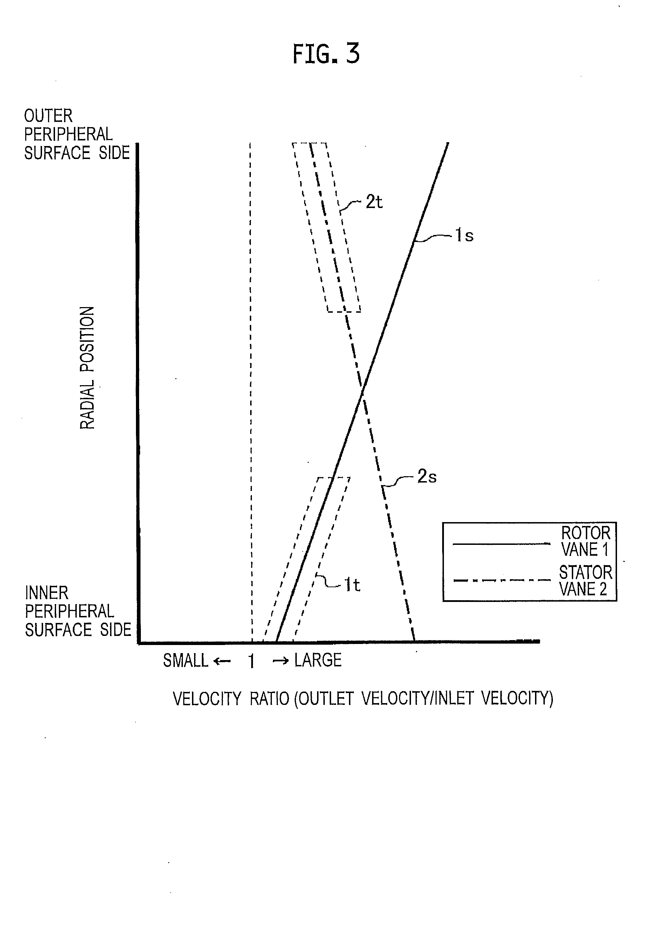

Fig. 3 is an explanatory view showing change of velocity ratios according to positions of the rotor vane and the stator vane in the radial direction (the vane radial direction). A horizontal axis indicates a velocity ratio (an outlet velocity/an inlet velocity), and a vertical axis indicates a position in the radial direction. A solid line in Fig. 3 indicates a velocity ratio of the rotor vane 1, and a chain line therein indicates a velocity ratio of the stator vane 2.

As shown in Fig. 3, the velocity ratio in the rotor vane 1 (refer to Fig. 1) is smaller on an inside (the inner endwall surface 31 side) in the vane radial direction (the radial direction of the turbine) than on an outside (the outer endwall surface 32 side) therein. In contrast, the velocity ratio in the stator vane 2 (refer to Fig. 1) is smaller on the outside (the outer endwall surface 32 side) in the vane radial direction (the radial direction of the turbine) than on the inside (the inner endwall surface 31 side) therein. Here, the tandem-vane section 1t of the rotor vane 1 and the tandem-vane section 2t of the stator vane 2 are formed in ranges surrounded by broken lines in Fig. 3. Namely, the tandem-vane section 1t of the rotor vane 1 and the tandem-vane section 2t of the stator vane 2 are each formed on a side having a smaller velocity ratio of one end side and the other end side in the vane radial direction. In addition, the single-vane section 1s of the rotor vane 1 and the single-vane section 2s of the stator vane 2 are each formed on the side having a larger velocity ratio of the one end side and the other end side in the vane radial direction.

As described above, the velocity ratio of the outer endwall surface 32 side in the rotor vane 1 is larger than the velocity ratio of the inner endwall surface 31 side therein. This is because an endwall velocity (a velocity in an endwall direction) of the outer endwall surface 32 side of the rotor vane 1 is larger than an endwall velocity (a velocity in an endwall direction) of the inner endwall surface 31 side. Specifically, an inflow velocity in an inlet of the rotor vane 1 (i.e., a velocity of an airflow that flows into the rotor vane 1 of a subsequent stage in an outlet of the stator vane 2 of a preceding stage) is smaller on the outer endwall surface 32 side than on the inner endwall surface 31 side. In addition to that, the endwall velocity of the outer endwall surface 32 side is larger than the endwall velocity of the inner endwall surface 31 side. Therefore, when being converted into a relative inflow velocity, the inflow velocity becomes increasingly smaller on the outer endwall surface 32 side than on the inner endwall surface 31 side. In contrast, relative outlet velocities of the inner endwall surface 31 side and the outer endwall surface 32 side are substantially the same as each other. Accordingly, the velocity ratio of the rotor vane 1 becomes larger on the outer endwall surface 32 side than on the inner endwall surface 31 side.

Furthermore, the velocity ratio of the outer endwall surface 32 side in the stator vane 2 is smaller than the velocity ratio of the inner endwall surface 31 side therein. This is because, as shown in Fig. 1, the outer endwall surface 32 side of the flow path 3 is more expanded along a flow direction in comparison with the inner endwall surface 31 side, and thus a diffuser effect appears, and acceleration of the airflow on the outer endwall surface 32 side is more suppressed by the diffuser effect in comparison with that on the inner endwall surface 31 side. Here, assuming that an endwall slope angle of the inner endwall surface 31 with respect to an axial direction is α, and an endwall slope angle of the outer endwall surface 32 with respect to the axial direction is β, the endwall slope angle β is larger than the endwall slope angle α in the flow path 3 shown in Fig. 1. Accordingly, it can also be said, in other words, that the tandem-vane section 2t of the stator vane 2 is formed on the surface having a larger endwall slope angle of the inner endwall surface 31 and the outer endwall surface 32 of the flow path 3 in the radial direction. Similarly, it can also be said, in other words, that the single-vane section 2s of the stator vane 2 is formed on the surface having a smaller endwall slope angle of the inner endwall surface 31 and the outer endwall surface 32 of the flow path 3 in the radial direction.

Note that the endwall slope angle β is larger than the endwall slope angle α in the embodiment shown in Fig. 1. However, the magnitude relation is not limited to the embodiment shown in Fig. 1. For example, the endwall slope angle α may be larger than the endwall slope angle β. Alternatively, the endwall slope angle P may be larger than the endwall slope angle α only in a part of the flow path 3 in the axial direction.

In the stator vane 2, it is possible to select whether to form the tandem-vane section 2t on the side having the smaller velocity ratio of the one end side and the other end side in the vane radial direction or whether to form the tandem-vane section 2t on the side having the larger endwall slope angle of the inner endwall surface 31 and the outer endwall surface 32 of the flow path 3 in the radial direction, in consideration of degrees of effects of both formations on the airflow. As a result, the tandem-vane section 2t of the stator vane 2 may be formed on the inner endwall surface 31 side of the flow path 3 in the radial direction, or may be formed on the outer endwall surface 32 side thereof.

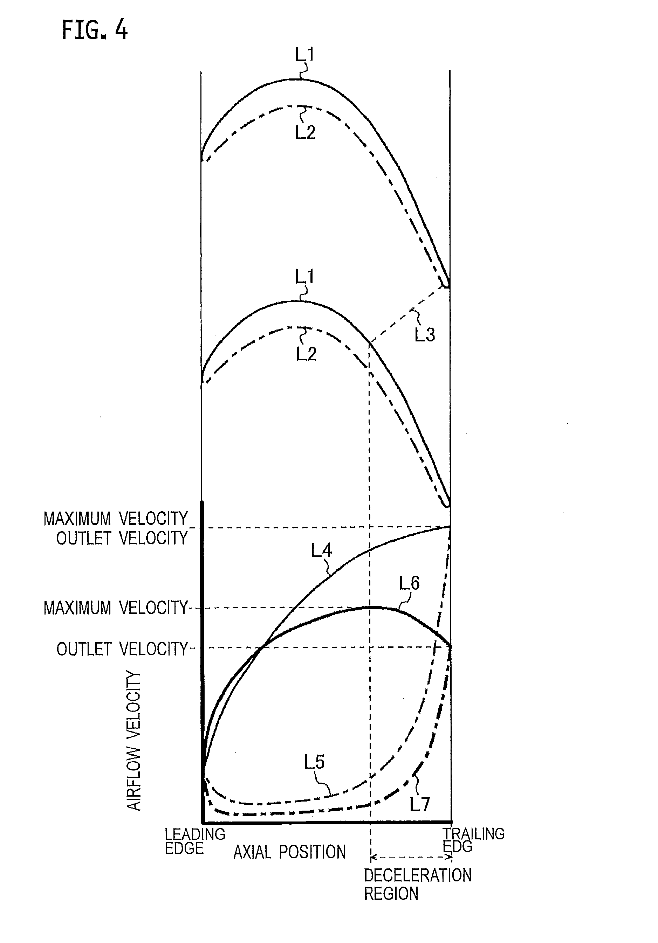

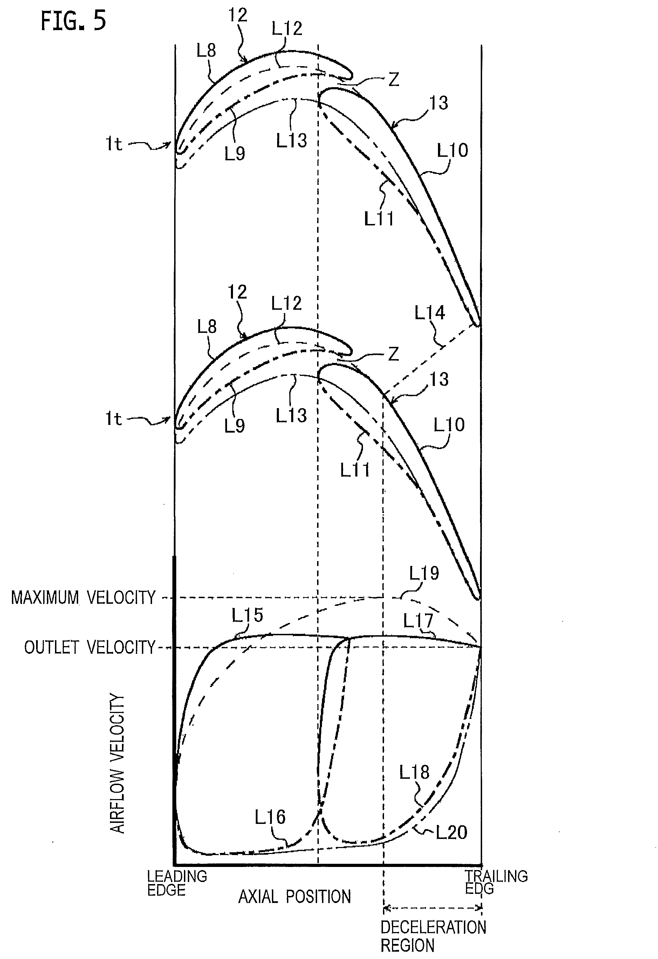

Next, there will be explained an action of the above-described vane structure for the axial flow turbomachine according to the embodiment. Fig. 4 is an explanatory view showing change of an airflow velocity from a leading edge to a trailing edge of a vane structure in prior art. Fig. 5 is an explanatory view showing change of an airflow velocity of the vane structure according to the embodiment.

A vane shown in Fig. 4 has a usual structure by prior art. Namely, the vane is constituted of a single-vane section of a one-vane structure, and does not have a tandem-vane section. In a cross-sectional view of the vane shown in an upper part of Fig. 4, a solid line L1 indicates a convex surface side of the vane, a chain line L2 indicates a concave surface side of the vane, and a broken line L3 indicates a throat portion in which an interval between adjacent vanes is the narrowest.

In addition, in a graph shown in a lower part of Fig. 4, a horizontal axis indicates an axial position of the vane in the axial direction, and a vertical axis indicates the airflow velocity. Furthermore, a solid line L4 in the graph indicates a velocity of the convex surface side when the velocity ratio is large, a chain line L5 indicates a velocity of the concave surface side when the velocity ratio is large, a solid line L6 indicates a velocity of the convex surface side when the velocity ratio is small, and a chain line L7 indicates a velocity of the concave surface side when the velocity ratio is small.

When the velocity ratio is large, a maximum velocity (a peak Mach number) in the convex surface side of the vane is located at the trailing edge of the vane as shown by the solid line L4. In this case, since an outlet velocity is equal to the maximum velocity, a deceleration region is not generated. In contrast, when the velocity ratio is small, the maximum velocity in the convex surface side of the vane is located more forward than the trailing edge of the vane (at a position of the throat portion) as shown by the solid line L6. Accordingly, in this case, the outlet velocity is smaller than the maximum velocity. For this reason, when the velocity ratio is small, the deceleration region is generated between a position where the airflow velocity reaches a maximum and the trailing edge, in the convex surface side of the vane, and the deceleration region induces reduction in efficiency, and generation of a secondary flow.

Consequently, in the embodiment, as shown in Figs. 1 to 3, the tandem-vane sections It and 2t are provided on the inner endwall surface 31 side of the rotor vane 1 and the outer endwall surface 32 side of the stator vane 2, the inner endwall surface 31 side and the outer endwall surface 32 side each having a small velocity ratio. Thereby, a load of the deceleration region (a difference between the maximum velocity and the outlet velocity) is distributed to the front vanes 12 and 22 and the rear vanes 13 and 23 of the tandem-vane sections 1t and 2t, and reduction in efficiency and generation of the secondary flow are suppressed.

In addition, the velocity ratios are large on the outer endwall surface 32 side of the rotor vane 1 and the inner endwall surface 31 side of the stator vane 2, and the deceleration region causing the reduction in efficiency is hard to be generated. Accordingly, when the tandem vanes are provided on the outer endwall surface 32 side of the rotor vane 1 and the inner endwall surface 31 side of the stator vane 2, respectively, efficiency may be all the more reduced. Consequently, in the embodiment, the single-vane sections 1s and 2s are provided on the outer endwall surface 32 side of the rotor vane 1 and the inner endwall surface 31 side of the stator vane 2, respectively, and the tandem-vane sections 1t and 2t are provided in the remaining parts, respectively.

That is, in the embodiment, the tandem-vane sections 1t and 2t, and the single-vane sections 1s and 2s are differently used according to change (magnitude) of the velocity ratio in the vane radial direction of the rotor vane 1 and the stator vane 2. Thereby, efficiency as the whole vane improves, and generation of the secondary flow is suppressed. Note that a vane having the tandem-vane sections 1t and 2t in a part in the vane radial direction is, for example, referred to as a partial tandem vane.

Fig. 5 shows the change of the airflow velocity of the vane structure according to the embodiment when the velocity ratio is small. In a cross-sectional view of the vane shown in an upper part of Fig. 5, a solid line L8 indicates a convex surface side of the front vane 12, a chain line L9 indicates a concave surface side of the front vane 12, a solid line L10 indicates a convex surface side of the rear vane 13, a chain line L11 indicates a concave surface side of the rear vane 13, a broken line L12 indicates a convex surface side of a conventional vane, a chain double-dashed line L13 indicates a concave surface side of the conventional vane, and a broken line L14 indicates a throat portion.

In addition, in a graph shown in a lower part of Fig. 5, a horizontal axis indicates a position in the axial direction in the vane, and a vertical axis indicates the airflow velocity. In the graph, a solid line L15 indicates a velocity of the convex surface side of the front vane 12, a chain line L16 indicates a velocity of the concave surface side of the front vane 12, a solid line L17 indicates a velocity of the convex surface side of the rear vane 13, a chain line L18 indicates a velocity of the concave surface side of the rear vane 13, a broken line L19 indicates a velocity of the convex surface side of the conventional vane, and a chain double-dashed line L20 indicates a velocity of the concave surface side of the conventional vane.

As shown in Fig. 5, the tandem-vane section 1t is applied to a portion of the rotor vane 1 having a smaller velocity ratio, whereby a deceleration load (a deceleration amount: a difference between a maximum velocity and an outlet velocity) generated in a deceleration region in the case of the conventional vane structure is distributed to the front vane 12 and the rear vane 13, and is thereby reduced. Accordingly, efficiency correlated with the deceleration load is enhanced. Furthermore, an airflow of the convex surface side of the front vane 12 and an airflow of the concave surface side thereof are connected in a trailing edge of the front vane 12, and a difference of static pressures between the vanes can be once eliminated in the front vane 12. Thereby, generation and growth of the secondary flow can be suppressed. Note that although the action of the rotor vane 1 has been explained in Fig. 5, an action of the stator vane 2 similar to the action of the rotor vane 1 can also be obtained.

In addition, as shown in Fig. 5, the trailing edge of the front vane 12 and a leading edge of the rear vane 13 overlap with each other in an airflow direction while being separated from each other in a direction perpendicular to the airflow. A nozzle-shaped flow path Z is formed in this overlapping portion. The flow path Z accelerates a flow of the concave surface side of the front vane 12 when the flow passes through the flow path Z, and supplies the flow to the convex surface side of the rear vane 13. Accordingly, a thickness of a boundary layer of the convex surface side of the rear vane 13 can be made thin, and performance of the vane can be enhanced.

Namely, the airflow accelerated by the flow path Z is blown against the convex surface side of the rear vane 13, whereby generation of a separation eddy generated at the time of transition of the boundary layer from a laminar flow to a turbulent flow in the convex surface side of the rear vane 13 can be suppressed, and performance of a vane element can be improved. Note that performance similar to the above can be obtained also in the tandem-vane section 2t of the stator vane 2.

As shown in Figs. 2 (a) and 2(b), the convex surface side of the rear vane 13 of the rotor vane 1 may be continuous with a convex surface side of the single-vane section 1s. Namely, at least a part of a convex surface of the rear vane 13 may be smoothly connected to a convex surface of the single-vane section 1s. In addition, the front vane 12 of the rotor vane 1 may be inclined to the single-vane section 1s. Similarly, the convex surface side of the rear vane 23 of the stator vane 2 may be continuous with a convex surface side of the single-vane section 2s. Namely, at least a part of a convex surface of the rear vane 23 may be smoothly connected to a convex surface of the single-vane section 2s. Furthermore, the front vane 22 of the stator vane 2 may be inclined to the single-vane section 2s. According to such a configuration, a position of a throat portion T does not change from the single-vane sections 1s and 2s to the tandem-vane sections 1t and 2t. Namely, it becomes easy to change design from the conventional vane including only a single-vane section to the partial tandem vane having the tandem-vane sections 1t and 2t.

In addition, since the front vane 12 is inclined to the single-vane section 1s, the front vane 12 is brought into a state of bow stacking, a flow of an end portion of the front vane 12 in the vane radial direction is guided to a center of the front vane 12 in the vane radial direction, and the secondary flow can be reduced.

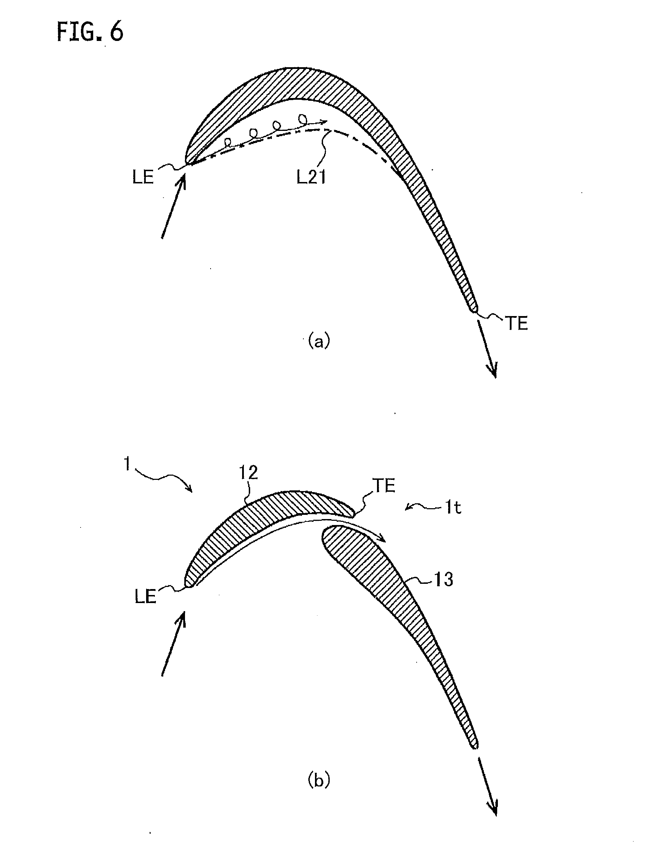

Here, Figs. 6 (a) and 6 (b) are explanatory views each showing one of effects of the vane structure according to the embodiment, Fig. 6(a) shows a cross-sectional view of the conventional vane structure, and Fig. 6(b) shows a cross-sectional view of the vane structure according to the embodiment. Bold arrows in Figs. 6(a) and 6(b) indicate airflow directions, respectively.

In the conventional vane structure shown in Fig. 6(a), since a direction of an airflow is largely changed from an arrow direction of an inlet to an arrow direction of an outlet in one vane, a separation is easily generated on a concave surface side of a leading edge LE of the vane, which also causes the secondary flow. Consequently, in the conventional vane structure, measures to make a vane shape of a concave surface side thick are often taken as shown by a chain line L21 in order to reduce a separation region, thereby leading to increase in weight.

In contrast, in the embodiment shown in Fig. 6(b), since an airflow that flows from the leading edge LE of the front vane 12 to the concave surface side thereof is blown out of a trailing edge TE of the front vane 12 to the convex surface side thereof, the separation of the airflow that flows on the concave surface side of the front vane 12 can be suppressed in comparison with the conventional vane structure, there is no need for making the front vane 12 thick, and thus reduction in weight of the vane can be achieved.

Hereinbefore, although the preferred embodiment of the present invention has been explained with reference to the accompanying drawings, it goes without saying that the present invention is not limited to the above-described respective embodiments, and it is needless to say that various types of change examples or modification examples in a category described in claims also belong to the technical scope of the present invention.

For example, although in the above-described embodiment, there has been explained by illustration a case where the rotor vane 1 and the stator vane 2 are arranged in the flow path 3, the tandem-vane section 1t is formed on the inner endwall surface 31 side of the flow path 3 in the radial direction in the rotor vane 1, and where the tandem-vane section 2t is formed on the outer endwall surface 32 side of the flow path 3 in the radial direction in the stator vane 2, the present invention can be applied also to an axial flow turbomachine having only the rotor vane 1, or an axial flow turbomachine having only the stator vane 2, or can also be applied only to either one of the rotor vane 1 and the stator vane 2 in an axial flow turbomachine having both of them. In addition, the present invention can be applied also to axial flow turbomachines other than a gas turbine engine.

## Claims

1. A vane structure for an axial flow turbomachine, a vane being used as a rotor vane or a stator vane arranged in a flow path of the axial flow turbomachine, the vane structure comprising:
a single-vane section of a one-vane structure formed in a part in a vane radial direction; and
a tandem-vane section which is formed in a remaining part in the vane radial direction continuously with the single-vane section, and which includes a front vane arranged forward in an airflow flowing through the axial flow turbomachine and a rear vane arranged backward therein.

2. The vane structure for the axial flow turbomachine according to claim 1, wherein
the tandem-vane section is formed on a side having a smaller velocity ratio of one end side and the other end side in the vane radial direction, and wherein
the single-vane section is formed on a side having a larger velocity ratio of the one end side and the other end side in the vane radial direction.

3. The vane structure for the axial flow turbomachine according to claim 1, wherein
the tandem-vane section is formed on a surface having a larger endwall slope angle of an inner endwall surface and an outer endwall surface of the flow path in a radial direction, and wherein
the single-vane section is formed on a surface having a smaller endwall slope angle of the inner endwall surface and the outer endwall surface of the flow path in the radial direction.

4. The vane structure for the axial flow turbomachine according to claim 1, wherein
the single-vane section and the tandem-vane section constitute the rotor vane, and wherein
the tandem-vane section is located on an inner endwall surface side of the flow path in the radial direction.

5. The vane structure for the axial flow turbomachine according to claim 1, wherein
the single-vane section and the tandem-vane section constitute the stator vane, and wherein
the tandem-vane section is located on an inner endwall surface side or an outer endwall surface side of the flow path in the radial direction.

6. The vane structure for the axial flow turbomachine according to any one of claims 1 to 5, wherein
a convex surface side of the rear vane is continuous with a convex surface side of the single-vane section, and wherein
the front vane is inclined to the single-vane section.

7. A gas turbine engine comprising an axial flow turbomachine that includes the vane of the structure according to any one of claims 1 to 6 as a rotor vane or a stator vane.
